# EUROPÄISCHE PATENTSCHRIFT

(11) **EP 1 310 316 B1**
(45) Veröffentlichungstag und Bekanntmachung des Hinweises auf die Patenterteilung: **22.10.2008**
(21) Anmeldenummer: 02405834.9
(22) Anmeldetag: 26.09.2002
(51) Int. Cl.: B23D 61/18

(54) **Sägegarn**
Saw wire
Scie à fil

(30) Priorität: 13.11.2001 EP 01811090
(43) Veröffentlichungstag der Anmeldung: 14.05.2003
(73) Patentinhaber: sia Abrasives Industries AG, 8501 Frauenfeld (CH)
(72) Erfinder: Jentgens, Christian, 8360 Eschlikon (CH)
(74) Vertreter: Welch, Andreas

(56) Entgegenhaltungen:
- EP-A- 0 680 813
- EP-A- 1 025 942
- DE-A- 2 820 014
- FR-A- 1 142 604
- US-A- 5 068 142
- PATENT ABSTRACTS OF JAPAN vol. 1996, no. 09, 30. September 1996 (1996-09-30) -& JP 08 126953 A (SHIN ETSU HANDOTAI CO LTD), 21. Mai 1996 (1996-05-21)
- PATENT ABSTRACTS OF JAPAN vol. 1998, no. 11, 30. September 1998 (1998-09-30) -& JP 10 151559 A (KITAMURA ATSUSATO), 9. Juni 1998 (1998-06-09)
- PATENT ABSTRACTS OF JAPAN vol. 2000, no. 03, 30. März 2000 (2000-03-30) -& JP 11 347911 A (TANI YASUHIRO;RICOH CO LTD), 21. Dezember 1999 (1999-12-21)

## Beschreibung

Die vorliegende Erfindung betrifft ein Sägegarn, ein Verfahren zu seiner Herstellung sowie dessen Verwendung zum Schneiden bzw. Teilen von harten Werkstoffen wie beispielsweise monokristallinem Silicium.

Dünne Scheiben aus sprödharten Materialien finden in zahlreichen technischen Bereichen Anwendung. Als prominentes Beispiel sei nur die Verwendung sogenannter Silicium-Wafer in der Halbleitertechnologie erwähnt. Derartige Scheiben werden in der Regel aus Blöcken oder Einkristallen der entsprechenden Materialien durch Schneide- oder Trennvorgänge gewonnen. Herkömmlich werden diese Schneide- oder Trennvorgänge unter Verwendung eines Sägedrahts aus Stahl in Gegenwart eines Schleifmittels durchgeführt. In der Regel wird das Schleifmittel in Form einer losen Aufschlämmung während des Schneidevorgangs auf den Sägedraht gebracht, um das Schneiden des Werkstoffs zu ermöglichen. Eine derartige Vorrichtung ist beispielhaft in der US-4,187,828 gezeigt. Dieses herkömmliche Verfahren leidet jedoch unter dem Nachteil, dass sich der Sägedraht während des Arbeitsvorgangs stark abnutzt und in der Regel nur einmal verwendet werden kann. Zudem fallen bei der Verwendung von losen Aufschlämmungen von Schleifmaterial in nicht unerheblichem Masse nicht recyclebare Abfälle an.

Es hat daher Bemühungen gegeben, den Sägedraht durch direktes Aufbringen des Schleifmittels auf dessen Oberfläche widerstandsfähiger zu machen. So ist in der EP-A-0 982 094 ein Sägedraht beschrieben, bei der ein Sägedraht aus Stahl über eine haftvermittelnde Zwischenschicht mit einer metallischen Bindephase verbunden ist, in der das Schleifmittel, beispielsweise Diamantkörner, eingelagert ist. Eine ähnliche Drahtsäge ist auch in der US-4,485,757 beschrieben. Derartige Sägedrahte sind aber im Herstellungsprozess kostspielig. Zudem leiden sie oft unter dem Problem der Wasserstoffversprödung und daraus resultierenden Spontanbrüchen.

In der JP-A-11207598 ist ein Sägedraht beschrieben, der aus einem Pianodraht und Schleifpartikeln besteht, die auf der Oberfläche des Drahts mittels eines bestimmten Bindemittels befestigt sind. Das Bindemittel ist aufgrund der Zugabe von Additiven wie Metallteilchen widerstandsfähiger gegen äussere Einflüsse. In der US-5,313,742 sind Schneideräder beschrieben, die aufgrund ihres einstückigen Aufbaus mit einer grösseren Dicke im mittleren, nichtschneidenden Bereich und einer geringeren Dicke in den äusseren Schneidebereichen eine erhöhte Festigkeit aufweisen. Das Schneiderad besteht aus einem Bindeharz, in das Schleifpartikel gemischt sind.

Die vorstehend beschriebenen Schneidewerkzeuge erfüllen die an sie gestellten Anforderungen hinsichtlich der Verwendung zum Schneiden von hartspröden Werkstoffen jedoch nicht optimal. Gerade bei teuren Werkstoffen wie einkristallinem Silicium sollten die Schnittbreiten sehr gering sein, um den Schnittverlust so klein wie möglich zu halten. Naturgemäss erhöht sich der Durchmesser des Schneidewerkzeugs durch Auftragen einer das Schleifmittel enthaltenden Schicht auf den Draht, wodurch die Schnittbreite erhöht wird. Bei Verwendung von Schleifmittel in Form einer losen Aufschlämmung muss mit hohen Schnittgeschwindigkeiten von etwa 1000 m/min gearbeitet werden, um ein Mitreissen der Schleifpartikel und somit einen Schnitt zu erreichen. Das führt zu einem starken Temperaturanstieg und macht eine Wasserkühlung während des Schneideprozesses unumgänglich. Bei Verwendung von Diamant als Schleifmaterial kommt es aufgrund des sehr guten Wärmeleitfähigkeitseigenschaften dieses Materials selbst bei Wasserkühlung zu lokal stark erhöhten Temperaturen und somit zu einer erheblichen Belastung für das Schneidewerkzeug und einem daraus resultierenden schnelleren Verschleiss. Ist das Schleifmittel auf der Oberfläche des Schneidewerkzeugs befestigt, wird das Schneidewerkzeug nach Abtragung dieser Oberflächenschicht unbrauchbar, was aufgrund der vorstehend beschriebenen Bedingungen während des Schneidens hartspröder Werkstoffe sehr schnell geschieht.

Verbundmaterialien mit einem Kern aus Fasermaterial und einer dieses Fasermaterial umfüllenden Polymermatrix sind grundsätzlich bekannt. Beispielsweise ist in der US-5,068142 ein derartiges faserverstärktes Verbundmaterial zur Verwendung im Baugewerbe beschrieben, beispielsweise zur Verhinderung von Erdrutschen. Dieses Verbundmaterial besteht aus einer Vielzahl von Fasern und weist eine Gesamtdicke im Bereich von mehreren Millimetern oder mehr auf.

In der WO 93/18891 ist eine Bürste zum Polieren von Oberflächen beschrieben, welche aus einem thermoplastischen Polymer mit darin befindlichen Schleifpartikeln besteht. Es wird aber in dieser Schrift ausdrücklich darauf hingewiesen, dass die dort beschriebenen Strukturen sich insbesondere hinsichtlich der Zugfestigkeit von Strukturen unterscheiden, bei denen ein vorgeformtes Kernmaterial nachträglich mit einer Beschichtung aus mit Schleifmittel gefülltem thermoplastischen Elastomer überzogen wird. Es ist nicht beschrieben, dass die dort aufgeführten Filamente zum Schneiden von hartspröden Materialien verwendet werden können.

In der JP-A-10-151559 ist eine Drahtsäge beschrieben, die zum mehrmaligen Schneiden unter Wasserkühlung geeignet ist. Diese Säge besteht aus einem Multifilament-Garn, auf dessen Oberfläche und in dessen Innern Schleifmittel bereitgestellt ist. Das Schleifmittel ist mittels eines besonderen Bindeharzes auf der Basis von Polytetrafluorethylen als unverzichtbarem Bestandteil mit dem Multi-Filament verbunden. Das Schleifmittel-/ Bindemittelgemisch wird in Form einer Dispersion auf das Multifilament aufgetragen. Dies macht einen nachträglichen Evaporationsschritt erforderlich, bei dem es zur Bläschenbildung kommt. Eine exakte zylindrische Form des Sägedrahts ist somit nicht erhältlich. Zudem ist der Einsatz von fluorhaltigen Bindemitteln aus ökologischen und toxikologischen Gründen bedenklich.

In der FR-A-1 142 604 ist grundsätzlich die Einsetzbarkeit von Kunststoffen als Material für Sägedrähte beschrieben. In dieser Schrift ist aber lediglich ein Sägedraht mit maximal 3 Kunststofffasern erläutert. Die Verwendung eines für die Sägeanwendungen der vorliegenden Erfindung erforderlichen Multifilaments ist nicht offenbart.

Es bestand daher die Aufgabe der vorliegenden Erfindung, ein Schneidewerkzeug bereitzustellen, mit welchem die vorstehend beschriebenen Nachteile aus dem Stand der Technik überwunden werden können.

Die vorstehende Aufgabe wird erfindungsgemäss durch ein Sägegarn gemäß dem Anspruch 1 gelöst. Vorzugsweise nimmt die Menge an Schleifmaterial in der Schleifmischung von der Oberfläche des Sägegarns zum Inneren hin graduell ab. Mit anderen Worten befinden sich bei diesem Sägegarn mehr Schleifmaterialteilchen an der Oberfläche als im Innern. Unter einer graduellen Abnahme der Menge an Schleifmaterial soll verstanden werden, dass die Menge an Scheifmaterial von der Oberfläche des Garns zu dessem Inneren hin im wesentlichen kontinuierlich abnimmt. Gewisse Abweichungen der Kontinuität, beispielsweise Abweichungen von etwa 10%, können sich aus dem Herstellungsprozess ergeben. Bevorzugt nimmt die Menge an Schleifmaterial im Sägegarn von der Oberfläche zum Innern hin nach einer Strecke von 30 µm um jeweils 2-60%, vorzugsweise um 5-40%, besonders bevorzugt um 5-20% ab.

Gemäss einer bevorzugten Ausführungsform der vorliegenden Erfindung weist das Sägegarn eine Dicke von gleich oder weniger als 350 µm auf.

Gemäss einer bevorzugten Ausführungsform der vorliegenden Erfindung weist das Sägegarn eine Dicke von 125-300 µm auf.

Unter Multi-Filament wird ein Verbundmaterial verstanden, dass aus vielen einzelnen Fasern aufgebaut ist.

Überraschend wurde gefunden, dass die erfindungsgemässen Sägegarne sich hervorragend zum Schneiden von hartspröden Materialien eignen. Durch die Verwendung von vergleichsweise wenig Fasern im Bereich von 200-1000 Fasern, vorzugsweise 200-800 Fasern, weist das Verbundmaterial einen Durchmesser von etwa 125 bis 350 µm auf, wodurch Schnittbreiten von weniger oder gleich 350 µm erreicht werden können. Im Gegensatz zu den Schneidewerkzeugen aus dem Stand der Technik, bei denen lediglich auf der Oberfläche eines Metalldrahts eine schleifmittelhaltige Schicht vorhanden ist und die folglich nach Abnutzung dieser Oberfläche unbrauchbar werden, ist bei dem erfindungsgemässen Sägegarn sowie beim Sägegarn gemäß der JP-A-10-151559 eine Schleifmischung zwischen den einzelnen Fasern vorhanden. Bei Abrieb der Oberfläche des Sägegarns wird somit während des Arbeitsvorgangs neues Schleifmittel im Innern des Schleifgrans freigelegt, welches das ursprünglich an der Oberfläche befindliche und durch Verschleiss verlorengegangene Schleifmittelersetzen kann. Mit dem erfindungsgemässen Sägegarn sowie mit dem Sägegarn gemäß der JP-A-10-151559 lassen sich somit deutlich erhöhte Standzeiten beim Schneiden von hartspröden Materialien erreichen.

Zudem kann das Schneiden hartspröder Materialien mit den erfindungsgemässen Sägegarnen bei niedrigeren Schnittgeschwindigkeiten durchgeführt werden. Dadurch wird die Belastung des Schneidewerkzeugs aufgrund von während des Schneidens auftretenden erhöhten Temperaturen verringert. Zudem wird eine sorgfältigere Verfahrensführung möglich, welche präzisere Schnitte mit weniger Schnittverlust erlaubt. Eine Zuführung einer losen Aufschlämmung von Schleifmaterial ist nicht notwendig.

Zudem ist das erfindungsgemässe Sägegarn im Gegensatz zu dem Sägegarn aus der JP-A-10 151 559 nicht auf ein Bindeharz beschränkt, das Polytetrafluorethylen als unverzichtbaren Bestandteil enthält und daher nicht die hiermit verbundenen ökologischen und toxikologischen Nachteile aufweist.

Weiterhin kann gemäss der vorliegenden Erfindung ein Sägegarn erhalten werden, dass eine exakte zylindrische Form aufweist. Somit hat das erfindungsgemässe Sägegarn deutlich bessere Schneideeigenschaften.

Das erfindungsgemässe Sägegarn, ist wie nachstehend geschildert, auf einfache und kostengünstige Weise darstellbar.

Die vorliegende Erfindung wird nachstehend anhand von veranschaulichenden und nicht einschränkenden Zeichnungen näher erläutert. Es zeigt:

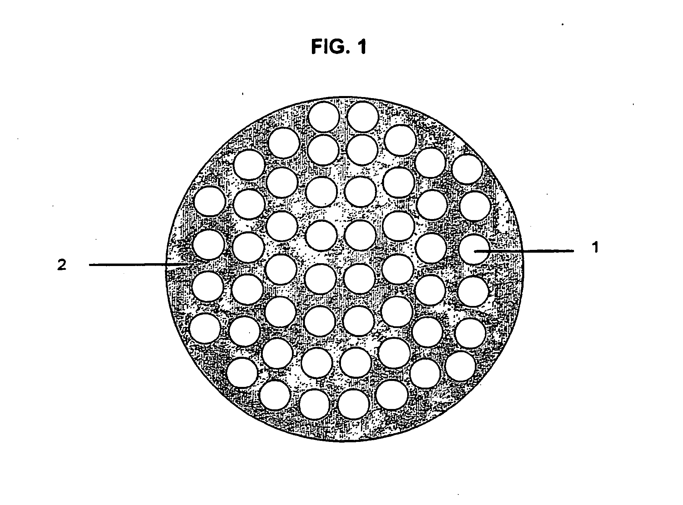

- FIG. 1: einen Querschnitt durch ein erfindungsgemässes Sägegarn.

Wie in Fig. 1 gezeigt umfasst das erfindungsgemässe Sägegarn ein Multi-Filament aus reissfesten Fasern (1), welche in einer Schleifmischung (2) eingebettet im wesentlichen parallel zueinander angeordnet sind und durch die Schleifmischung (2) voneinander getrennt sind. Das erfindungsgemässe Sägegarn umfasst 200 bis 1000, vorzugsweise 200 bis 800 einzelne Fasern (1). Daraus ergibt sich eine Dicke des Sägegarns von gleich oder weniger als 350 µm, vorzugsweise 125-300 µm. Die Fasern weisen vorzugsweise einen im wesentlichen runden Querschnitt auf, wobei andere Formen erfindungsgemäss ebenfalls möglich sind.

Die Fasern (1) können aus Materialien gefertigt sein, die zur Herstellung von faserverstärkten Werkstoffen eingesetzt werden. Beispielsweise seien Fasern aus m- und/oder p-Aramid (aromatisches Polyamid), ultrahochfestem Polyethylen, hochorientiertem Polyester, Polyester, Polyamid, Kohlefasern oder Glasfasern sowie Litzendrähte genannt. Besonders bevorzugt ist die Verwendung von Fasern aus p-Polyphenylen-2,6-benzobisoxazol. Bevorzugt können aber auch Kombinationen aller vorstehend genannten Materialien als Fasermaterial für die erfindungsgemässen Sägegarne eingesetzt werden.

Die Fasern (1) müssen eine Reissfestigkeit aufweisen, welche den Anforderungen des Prozesses des Schneidens von hartspröden Werkstoffen genügt. Gemäss der vorliegenden Anmeldung soll daher unter einer reissfesten Faser eine Faser verstanden werden, welche eine Zugfestigkeit (tensile strength) von mehr als 300 MPa aufweist. Die vorstehend aufgeführten Fasermaterialien erfüllen diese Anforderung.

Aufgrund der niedrigeren Schnittgeschwindigkeiten, die bei Verwendung des erfindungsgemässen Sägegarns zum Schneiden von hartspröden Materialien erforderlich sind, können auch Materialien zur Herstellung des Sägegarns eingesetzt werden, die für herkömmliche Schneidewerkzeuge aufgrund der bei deren Verwendung auftretenden hohen Temperaturen ungeeignet wären.

Wie aus Fig. 1 ersichtlich sind die Fasern (1) im wesentlichen parallel zueinander in eine Schleifmischung (2) eingebettet. Die Schleifmischung (2) enthält ein Bindeharz und Schleifmaterial. Das Bindeharz ist erfindungsgemäss ausgewählt aus der Gruppe bestehend aus Polyimiden, Polyphenylensulfiden, Polyetheretherketonen und Duroplasten wie beispielsweise härtbare Phenolharze, härtbare Phenol-FormaldehydHarze, Polyimidharze, Bismaleinimide, Epoxidharze, ungesättigte Polyesterharze, DAP-Harze (Polydiallylphthalat), MF-Formmassen wie beispielsweise Melamin-Formaldehyd-Formmassen, härtbare Melamin-Phenol-Formaldehyd-(MPF)-Formmassen oder vernetzte Polyurethane. Von den Duroplasten sind insbesondere härtbare Phenolharze, Epoxidharze, härtbare Phenol-Formaldehyd-Harze, MF-Formmassen wie beispielsweise Melamin-Formaldehyd-Formmassen und härtbare Melamin-Phenol-Formaldehyd-(MPF)-Formmassen bevorzugt. Gemäss der vorliegenden Erfindung können auch Gemische der vorstehenden Substanzen als Bindeharz verwendet werden.

Das Bindeharz enthält das Schleifmaterial in dispergierter Form. Bevorzugt handelt es sich hierbei um feinklassierten Diamant, Siliciumcarbid (SiC), Al₂O₃, sowie die sogenannten Super-Abrasives wie kubisches Bornitrid (c-BN), TiC, ZrC, HfC, Gemische aus diesen Carbiden, TiN, ZrN, HfN, oder Gemische aus diesen Nitriden. Bevorzugt ist die Verwendung von feinklassiertem Diamant als Schleifmaterial. Die Schleifpartikel haben vorzugsweise eine Grösse von 1 bis 25 µm, besonders bevorzugt 5 bis 20 µm.

Bevorzugt können auch Gemische der vorstehenden Substanzen als Schleifpartikel verwendet werden.

Die Schleifmischung umfasst vorzugsweise 0,1 Gew.-% bis 60 Gew.-%, vorzugsweise 20 Gew.-% bis 40 Gew.-% Schleifmaterial, bezogen auf das Gesamtgewicht der Schleifmischung.

Je nach gewünschter Anwendung beträgt dass Gewichtsverhältnis von Fasern zu Schleifmischung 4:1 bis 1:4. Der Fachmann kann das Gewichtsverhältnis problemlos unter Berücksichtigung der erforderlichen Eigenschaften des Sägegarns optimieren.

Die Schleifmischung kann weiterhin herkömmliche Additive wie Trennmittel, Gleitmittel, Füllstoffe, Pigmente, Haftvermittler, Stabilisatoren, Inhibitoren oder Beschleunigersysteme enthalten. Diese Additive sind dem Fachmann grundsätzlich bekannt und können von diesem entsprechend dem Anforderungsprofil des Sägegarns problemlos ausgewählt werden.

Die Schleifmischung kann, falls das gewählte Beschichtungsverfahren nicht die Zugabe der einzelnenen Komponenten gestattet, auf einfache, dem Fachmann bekannte Weise durch Mischen der einzelnen Bestandteile, beispielsweise in einer Kugelmühle, hergestellt werden.

Wie vorstehend erwähnt kann das erfindungsgemässe Sägegarn auf einfache Weise hergestellt werden. Die Fasern sind käuflich erhältlich und werden in Form eines Faserstrangs aus 200 bis 1000, vorzugsweise 200-800 Fasern bereitgestellt. Dieser Faserstrang wird anschliessend mit der Schleifmischung beschichtet beziehungsweise gefüllt.

Die Beschichtung und/oder Füllung kann beispielsweise mittels des Schmelzbeschichtungsverfahrens durchgeführt werden. Hierbei wird der zu beschichtende bzw. zu füllende Faserstrang durch eine das Bindeharz umfassende Schmelze gezogen und anschliessend abgekühlt.

Ein anderes Verfahren zur Beschichtung und/oder Füllung der Fasern ist das Nassimprägnierverfahren. Der Faserstrang wird auf einem sogenannten Roving-Gestell bereitgestellt und von diesem mit einer Geschwindigkeit von etwa 300-400 m/min abgewickelt. Die abgewickelten Fasern werden durch ein flüssiges Imprägnierbad gezogen, in welchem neben dem Bindeharz das Schleifmittel sowie gegebenenfalls weitere Additive enthalten sind. Anschliessend muss das Lösungsmittel durch Abdampfen entfernt werden, was durch Aufwärts- und Abwärtsziehen der beschichteten Fasern durch einen "Kühlturm" mit unterschiedlichen Temperaturzonen erfolgt.

Bei einer Alternative dieses Verfahrens wird die abgewickelte Faser mit Hilfe einer Sprühbeschichtungsvorrichtung mit der Schleifmischung überzogen und gefüllt. Aus einer oberhalb der Fasern angeordneten drehbaren Vorrichtung wird die gegebenenfalls unter Druck gelöste Schleifmischung auf die Fasern gesprüht. Unterhalb der zu besprühenden Fasern befindet sich eine Auffangvorrichtung, in welcher die nicht auf die Fasern aufgebrachte Schleifmischung gesammelt und zur erneuten Verwendung der drehbaren Vorrichtung oberhalb der Fasern zugeführt wird. Die Entfernung des Lösungsmittels erfolgt analog zu oben.

Alternativ kann das Beschichten und/oder Füllen der Faserstränge auch durch ein Trockenbeschichtungsverfahren erfolgen. Ein derartiges Verfahren ist beispielsweise in der EP-A-0 680 813 beschrieben. Hierbei werden die Faserstränge analog zum Nassimprägnierverfahren von einem Rovinggestell abgewickelt. Vorzugsweise werden sie zunächst mit einer Geschwindigkeit von etwa 400-600 m/min durch eine Vorrichtung geführt, in der sie elektrisch aufgeladen werden. Dadurch wird das Anhaften der Schleifmischung an den Fasern begünstigt. Anschliessend werden sie durch ein Wirbelsinterbad geführt, in welchem sich die fertige Schleifmischung in Pulverform befindet. Durch Löcher im Wannenboden wird Luft oder ein Inertgas in das Wirbelsinterbad hineingeblasen, wodurch ein wallendes Pulverbad entsteht. Das Pulver bleibt an den durch das Wirbelsinterbad gezogenen Fasern haften. Anschliessend werden die so erhaltenen überzogenen Fasern erwärmt. Dies erfolgt vorzugsweise durch Bestrahlung mit infrarotem Licht. Das auf den Fasern befindliche Bindeharz wird hierbei zumindest teilweise verflüssigt, wodurch eine Einstellung der Menge an auf die Fasern aufzutragender Schleifmischung möglich ist. Die Faserstränge können durch weiteres Erhitzen in einem Ofen und anschliessendes Führen durch Kalibrieröffnungen hinsichtlich ihres Aussendurchmessers eingestellt werden.

Gemäss einer in der WO 99/36239 beschriebenen bevorzugten Variante können die einzelnen Komponenten der Schleifmischung im Trockenbeschichtungsverfahren auch ohne vorangehende Compoundierung auf die Faserstränge aufgebracht werden. Hierzu werden die einzelnen Komponenten in das Wirbelsinterbad gebracht. Dort erfolgt ein Mischen beziehungsweise Durchmischen beispielsweise mit Hilfe eines Rotors, Rührers, mit Ultraschall und/oder elektromagnetischen Wellen. Der Mischvorgang muss so durchgeführt werden, dass eine Entmischung der einzelnen Komponenten im Wirbelsinterbad weitgehend verhindert beziehungsweise aufgehoben wird. Die weitere Verarbeitung erfolgt analog zum obigen Trockenbeschichtungsverfahren. Die äussere Form des Schleifgarns sowie die Verteilung der Schleifpartikel kann genau eingestellt werden, indem man zunächst in einem ersten Verfahrensschritt gemäss dem vorstehend beschriebenen Trockenbeschichtungsverfahren die Faserstränge nur mit dem Bindeharz oder mit einer Mischung aus Bindeharz und wenig Schleifpartikel überzieht. Das so erhaltene Zwischenprodukt kann anschliessend auf eine bestimmte Dimension kalibriert werden, da das aufgetragene Bindeharz noch nicht ausgehärtet ist. In einem zweiten Verfahrensschritt wird das so erhaltene kalibrierte Zwischenprodukt erneut durch ein Wirbelsinterbad gezogen, welches die Schleifpartikel allein oder in Gegenwart von wenig Bindeharz enthält. Da das auf die Faserstränge aufgetragene Bindeharz noch nicht ausgehärtet und somit feucht ist, können die im zweiten Verfahrensschritt aufgetragenen Schleifpartikel in das Bindeharz eindringen. Durch Variation der Verfahrensbedingungen kann die Verteilung der Schleifpartikel in der so gebildeten Schleifmischung beeinflusst werden. In der Regel wird aber der grössere Teil der Schleifpartikel bei dem vorstehend beschriebenen zweistufigen Herstellungsverfahren an der Oberfläche des erzeugten Sägegarns verbleiben.

In Zusammenhang mit dem vorstehend beschriebenen Verfahren bedeutet "wenig Bindeharz bzw. Schleifpartikel", dass die entsprechende Komponente im entsprechenden Wirbelsinterbad nur in einer Menge von maximal 5 Gew.-%, bezogen auf die jeweils andere Komponente Bindeharz oder Schleifpartikel, vorhanden ist.

Gemäss einer weiteren Ausführungsform der vorliegenden Erfindung erfolgt die Herstellung des Sägegarns im Trockenbeschichtungsverfahren mit Hilfe eines Zwillings-Fluidbades. Hierbei werden die Faserstränge in das erste Becken des Bads geführt, wo sie mit einem Bindemittel, vorzugsweise einem niederviskosen Bindemittel überzogen werden. Unter einem niederviskosen Bindeharz ist ein Harz mit einer Viskosität von weniger als 500 mPas, vorzugsweise mit einer Viskosität im Bereich von 100-500 mPas und besonders bevorzugt im Bereich von 100 bis 200 mPas zu verstehen. Anschliessend wird das so beschichtete Garn vorzugsweise senkrecht aus dem Bad herausgeführt, verzwirnt und wieder geschlossen. Über eine Umlenkung wird das beschichtete Garn in das zweite Becken des Zwillings-Fluidbads geführt, wo es wieder zumindest partiell geöffnet wird. Unter einer partiellen Öffnung wird eine nicht vollständige Öffnung der Verzwirnung verstanden, wobei jeder Öffnungsgrad zwischen 0 und 100%, vorzugsweise zwischen 50 und 99% umfasst ist. Das Verzwirnen und erneute Öffnen des das Garn bildenden Multi-Filaments kann beispielsweise durch Steuerung der Differentialgeschwindigkeiten an bereitgestellten Umlenkwalzen durchgeführt werden. Im zweiten Becken befindet sich eine Mischung aus Schleifmaterial und wenig Bindemittel. Im zweiten Becken bildet sich vorzugsweise ein stationärer Zustand der Zusammensetzung aus Schleifmaterial und Bindeharz aus, durch welches eine definierte Beschichtung des Multi-Filaments gewährleistet werden kann. Im zweiten Becken erfolgt eine Beschichtung des Garns mit Schleifmaterial und etwas Bindemittel. Das Schleifmaterial verbleibt dabei in der Mehrheit an der Oberfläche des Sägegarns. Bei dieser Verfahrensausgestaltung kommt es jedoch auch zu einem Eintrag des Schleifmaterials in das Innere des Sägegarns, wodurch ein Gradient des Schleifmaterials in der Schleifmischung wie vorstehend beschrieben ausgebildet wird.

In Zusammenhang mit dem vorstehend beschriebenen Verfahren bedeutet "wenig Bindemittel", dass die entsprechende Komponente im entsprechenden Wirbelsinterbad nur in einer Menge von maximal 5 Gew.-%, bezogen auf die Komponente Schleifmaterial, vorhanden ist.

Durch das vorstehend beschriebene Trockenbeschichtungsverfahren können die vorstehend aufgeführten Bindeharze ohne Einschränkung zur Herstellung der erfindungsgemässen Sägegarne eingesetzt werden. Im Gegensatz dazu können bei der Herstellung von Sägegarnen über Nassbeschichtungsverfahren in Abhängigkeit vom verwendeten Fasermaterial nur bestimmte Bindeharze herangezogen werden.

Mit dem vorstehend beschriebenen Trockenbeschichtungsverfahren, insbesondere dem zweistufigen Herstellungsverfahren, kann die Dimension des zu erzeugenden Sägegarns genau eingestellt werden. Es sind Sägegarne mit nahezu exakter zylindrischer Form herstellbar. Im Gegensatz dazu leiden über daass Nassbeschichtungsverfahren hergestellte Sägegarne unter einer Blasenbildung, die durch die erforderliche Verdampfung des Lösemittels verursacht wird. Auf diese Weise sind daher Sägegarne mit glatter, nahezu exakter zylindrischer Aussenform nicht erhältlich. Die Schnitteigenschaften der erfindungsgemässen Sägegarne sind somit denjenigen von Sägegarnen aus dem Stand der Technik überlegen.

Das erfindungsgemässe Sägegarn kann vorteilhaft zum Schneiden beziehungsweise Teilen von hartspröden Werkstoffen verwendet werden. Das Schneiden kann gemäss einem der hierfür verwendeten Verfahren durchgeführt werden. Vorteilhafterweise wird hierbei der Werkstoff und das Sägegarn extern mittels eines Kühlmittels wie beispielsweise Wasser gekühlt.

Das erfindungsgemässe Sägegarn eignet sich insbesondere zum Schneiden beziehungsweise Teilen von monokristallinenem Silicium, das gewöhnlich durch das Zonenschmelzverfahren in Form langer Stangen (Ingots) hergestellt wird und für die Halbleiterindustrie in kleine Scheiben (Wafer) geschnitten werden muss. Weiterhin können Materialien wie Silciumcarbid (für die Raumfahrtindustrie), Saphir (für Uhrengläser oder zur Herstellung von Leuchtdioden mit blauem Licht (blue LEDs), Quarz, Smaragd, Rubin, Keramik oder Al₂O₃ geschnitten werden.

Durch Verwendung des erfindungsgemässen Sägegarns kann der Schnittprozess mit Schnittgeschwindigkeiten deutlich unter 1000 m/min durchgeführt werden, ohne dass dies zu Einbussen hinsichtlich der Geschwindigkeit des Arbeitsvorgangs führt. Mit dem erfindungsgemässen Sägegarn können selbst bei geringeren Schnittgeschwindigkeiten höhere Abträge erzielt werden. Die geringere Schnittgeschwindigkeit erlaubt eine höhere Präzision des Arbeitsvorgangs sowie den Einsatz von Materialien, die bei herkömmlichen Schneidewerkzeugen aufgrund der dort beim Schneidevorgang herrschenden hohen Temperaturen nicht eingesetzt werden können.

## Patentansprüche

1. Sägegarn, umfassend eine Schleifmischung enthaltend ein Bindeharz und Schleifmaterial, sowie ein Multi-Filament aus 200-1000 reissfesten Fasern, welche im wesentlichen parallel zueinander angeordnet und von der Schleifmischung umhüllt sind, wobei der Raum zwischen den Fasern mit der Schleifmischung gefüllt ist, **dadurch gekennzeichnet, dass** das Bindeharz ausgewählt ist aus der Gruppe bestehend aus Polyimiden, Polyphenylensulfiden, Polyetheretherkatonen, und Duroplasten, oder einer Kombination dieser Materialien.

2. Sägegarn nach Anspruch 1, **dadurch gekennzeichnet, dass** die Menge an Schleifmaterial in der Schleifmischung von der Oberfläche des Schleifgarns zum Inneren hin graduell abnimmt.

3. Sägegarn nach Anspruch 1 oder 2, wobei das Sägegarn eine Dicke von gleich oder weniger als 350 µm aufweist.

4. Sägegarn nach Anspruch 1 oder 2, wobei das Sägegarn eine Dicke von 125-300 µm aufweist.

5. Sägegarn nach einem der Ansprüche 1 bis 4, wobei die Fasern aus einem Material aus der Gruppe, bestehend aus m- und/oder p-Aramid, ultrahochfestem Polyethylen, hochorientiertem Polyester, Polyester, Polyamid, Kohlefasern, p-Polyphenylen-2,6-benzobisoxazol oder Glasfasern oder Kombinationen dieser Materialien, aufgebaut sind.

6. Sägegarn nach Anspruch 5, wobei die Fasern aus m-Aramid, p-Aramid oder ultrahochfestem Polyethylen aufgebaut sind.

7. Sägegarn nach Anspruch 5, wobei die Fasern aus p-Polyphenylen-2,6-benzobisoxazol aufgebaut sind.

8. Sägegarn nach einem der Ansprüche 1 bis 7, wobei das duroplastische Polymer aus der Gruppe, bestehend aus härtbaren Phenolharzen, Epoxidharzen, härtbaren Phenol-Formaldehyd-Harzen, MF-Formmassen und härtbaren Melamin-Phenol-Formaldehyd-(MPF)-Formmassen oder einer Kombination dieser Materialien, ausgewählt ist.

9. Sägegarn nach einem der Ansprüche 1 bis 8, wobei das Schleifmaterial aus der Gruppe, bestehend aus feinklassiertem Diamant, Siliciumcarbid (SiC), Al₂O₃, kubischem Bornitrid (c-BN), TiC, ZrC, HfC, Gemischem aus diesen Carbiden, TiN, ZrN, HfN, oder Gemischem aus diesen Nitriden, oder einer Kombination dieser Materialien, ausgewählt ist.

10. Sägegarn nach Anspruch 9, wobei das Schleifmaterial feinklassierter Diamant ist.

11. Verfahren zur Herstellung eines Sägegarns nach einem der Ansprüche 1 bis 10, umfassend die Schritte
a) Bereitstellung eines Multifilaments aus 200-1000 reissfesten Fasern
b) Beschichten bzw. Füllen dieses Multi-Filaments mit einer Schleifmischung, umfassend ein Bindeharz und Schleifmaterial, wobei das Bindeharz ausgewählt ist aus der Gruppe bestehend aus Polyimiden, Polyphenylensulfiden, Polyetheretherketonen, und Duroplasten, oder einer Kombination dieser Materialien.

12. Verfahren nach Anspruch 11, wobei das Beschichten bzw. Füllen im Schritt b) durch ein Nassimprägnierverfahren oder ein Trockenbeschichtungsverfahren erfolgt.

13. Verfahren nach Anspruch 12, wobei der Schritt b) mit einem Trockenbeschichtungsverfahren durch Ziehen des Multi-Filaments durch eine Wirbelschicht durchgeführt wird.

14. Verfahren nach Anspruch 13, wobei der Schritt b) in einem zweistufigen Prozess zunächst durch Ziehen des Multi-Filaments durch eine Wirbelschicht, enthaltend Bindeharz und wenig oder keine Schleifpartikel, und nach anschliessender Kalibrierung erneut durch Ziehen durch eine Wirbelschicht, enthaltend Schleifpartikel und wenig oder kein Bindeharz, ausgeführt wird.

15. Verfahren nach Anspruch 13, wobei der Schritt b) in einem Zwillings-Fluidbad ausgeführt wird, umfassend das Durchführen des Multi-Filaments durch ein erstes Becken, enthaltend Bindeharz, sowie Überführen des Multi-Filaments in ein zweites Becken, enthaltend Schleifmaterial und wenig Bindeharz.

16. Verfahren nach Anspruch 15, wobei das Multi-Filament senkrecht aus dem ersten Becken herausgeführt, verzwirnt, umgelenkt, zumindest partiell geöffnet und anschliessend in das zweite Becken geführt wird.

17. Sägegarn, erhältlich nach einem Verfahren gemäss einem der Ansprüche 11 bis 16.

18. Sägegarn nach Anspruch 17, **dadurch gekennzeichnet, dass** die Menge an Schleifmaterial in der Schleifmischung von der Oberfläche des Schleifgarns zum Inneren hin graduell abnimmt.

19. Verwendung eines Sägegarns gemäss einem der Ansprüche 1 bis 10 oder 17 bis 18 zum Schneiden von hartspröden Werkstoffen.

20. Verwendung nach Anspruch 19, wobei das hartspröde Material aus der Gruppe, bestehend aus monokristallinenem Silicium, Silciumcarbid, Saphir, Quarz, Smaragd, Rubin, Keramik oder Al₂O₃ , ausgewählt ist.

## Claims

1. Sawing yarn comprising an abrasive mixture containing a bonding resin and abrasive material, and a multifilament of 200-1000 fibres which have high tensile strength and are arranged substantially parallel to one another and are surrounded by the abrasive mixture, the space between the fibres being filled with the abrasive mixture, **characterized in that** the bonding resin is selected from the group consisting of polyimides, polyphenylene sulphides, polyether ether ketones and thermosets, or a combination of these materials.

2. Sawing yarn according to Claim 1 **characterized in that** the amount of abrasive material in the abrasive mixture decreases gradually from the surface of the abrasive yarn to the interior.

3. Sawing yarn according to Claim 1 or 2, the sawing yarn having a thickness equal to or less than 350 µm.

4. Sawing yarn according to Claim 1 or 2, the sawing yarn having a thickness of 125-300 µm.

5. Sawing yarn according to any of Claims 1 to 4, the fibres being composed of a material from the group consisting of m- and/or p-aramid, ultra-high-strength polyethylene, highly orientated polyester, polyester, polyamide, carbon fibres, p-polyphenylene-2,6-benzobisoxazole or glass fibres or combinations of these materials.

6. Sawing yarn according to Claim 5, the fibres being composed of m-aramid, p-aramid or ultra-high-strength polyethylene.

7. Sawing yarn according to Claim 5, the fibres being composed of p-polyphenylene-2,6-benzobisoxazole.

8. Sawing yarn according to any of Claims 1 to 7, the thermosetting polymer being selected from the group consisting of curable phenol resins, epoxy resins, curable phenol/formaldehyde resins, MF molding materials and curable melamine/phenol/formaldehyde (MPF) molding materials or a combination of these materials.

9. Sawing yarn according to any of Claims 1 to 8, the abrasive material being selected from the group consisting of finely classified diamond, silicon carbide (SiC), Al₂O₃, cubic boron nitride (c-BN), TiC, ZrC, HfC, mixtures of these carbides, TiN, ZrN, HfN or mixtures of these nitrides, or a combination of these materials.

10. Sawing yarn according to Claim 9, the abrasive material being finely classified diamond.

11. Method for the production of a sawing yarn according to any of Claims 1 to 10, comprising the steps
a) preparation of a multifilament of 200-1000 fibres having high tensile strength,
b) coating or filling of this multifilament with an abrasive mixture comprising a bonding resin and abrasive material, the bonding resin being selected from the group consisting of polyimides, polyphenylene sulphides, polyether ether ketones and thermosets, or a combination of these materials.

12. Method according to Claim 11, the coating or filling in step b) being effected by a wet impregnation method or a dry coating method.

13. Method according to Claim 12, step b) being carried out by a dry coating method by drawing the multifilament through a fluidized bed.

14. Method according to Claim 13, step b) being carried out in a two-stage process, first by drawing the multifilament through a fluidized bed containing bonding resin and a small amount of abrasive particles or no abrasive particles and, after subsequent sizing, again by drawing through a fluidized bed containing abrasive particles and a small amount of bonding resin or no bonding resin.

15. Method according to Claim 13, step b) being carried out in a twin fluid bath, comprising passing the multifilament through a first tank, containing bonding resin, and transferring the multifilament to a second tank, containing abrasive material and a small amount of bonding resin.

16. Method according to Claim 15, the multifilament being removed vertically from the first tank, twisted, deflected, at least partly opened and then fed into the second tank.

17. Sawing yarn obtainable by a method according to any of Claims 11 to 16.

18. Sawing yarn according to Claim 17, **characterized in that** the amount of abrasive material in the abrasive mixture decreases gradually from the surface of the abrasive yarn to the interior.

19. Use of a sawing yarn according to any of Claims 1 to 10 or 17 to 18 for cutting hard brittle materials.

20. Use according to Claim 19, the hard brittle material being selected from the group consisting of monocrystalline silicon, silicon carbide, sapphire, quartz, emerald, ruby, ceramic or Al₂O₃.

## Revendications

1. Fil de sciage comprenant un mélange abrasif contenant une résine de liaison et une matière abrasive, ainsi qu'un multifilament composé de 200-1000 fibres résistantes à la rupture qui sont disposées globalement parallèlement et qui sont enrobées par le mélange abrasif, l'espace entre les fibres étant rempli avec ce mélange abrasif, **caractérisé en ce que** la résine de liaison est choisie dans le groupe constitué par les polyimides, les polyphénylène sulfide, les polyétheréthercétones et les thermodurcissables, ou par une combinaison de ces matières.

2. Fil de sciage selon la revendication 1, **caractérisé en ce que** la quantité de matière abrasive dans le mélange abrasif va en diminuant progressivement de la surface du fil abrasif vers l'intérieur.

3. Fil de sciage selon la revendication 1 ou 2, qui présente une épaisseur inférieure ou égale à 350 µm.

4. Fil de sciage selon la revendication 1 ou 2, qui présente une épaisseur de 125-300 µm.

5. Fil de sciage selon l'une des revendications 1 à 4, dans lequel les fibres se composent d'une matière du groupe constitué par un m-aramide et/ou un p-aramide, un polyéthylène ultrarésistant, un polyester à haute orientation, un polyester, un polyamide, des fibres de carbone, un poly(p-phénylène-2,6-benzobisoxazole) ou des fibres de verre, ou par des combinaisons de ces matières.

6. Fil de sciage selon la revendication 5, dans lequel les fibres se composent d'aramide m, d'aramide p ou de polyéthylène ultrarésistant.

7. Fil de sciage selon la revendication 5, dans lequel les fibres se composent de poly(p-phénylène-2,6-benzobisoxazole).

8. Fil de sciage selon l'une des revendications 1 à 7, dans lequel le polymère thermodurcissable est choisi dans le groupe constitué par des résines phénoliques durcissables, des résines époxy, des résines phénolformaldéhyde durcissables, des matières à mouler MF et des matières à mouler durcissables mélamine-phénolformaldéhyde (MPF), ou par une combinaison de ces matières.

9. Fil de sciage selon l'une des revendications 1 à 8, dans lequel la matière abrasive est choisie dans le groupe constitué par le diamant fin, le carbure de silicium (SiC), Al₂O₃, le nitrure de bore cubique (c-BN), TiC, ZrC, HfC, des mélanges de ces carbures, TiN, ZrN, HfN ou des mélanges de ces nitrures, ou par une combinaison de ces matières.

10. Fil de sciage selon la revendication 9, dans lequel la matière abrasive est constituée par du diamant fin.

11. Procédé pour fabriquer un fil de sciage selon l'une des revendications 1 à 10, comprenant les étapes qui consistent à
a) préparer un multifilament formé de 200-1000 fibres résistantes à la rupture,
b) recouvrir ou charger ce multifilament avec un mélange abrasif comprenant une résine de liaison et une matière abrasive, la résine de liaison étant choisie dans le groupe constitué par des polyimides, des polyphénylène sulfide, des polyétheréthercétones et des thermodurcissables, ou par une combinaison de ces matières.

12. Procédé selon la revendication 11, selon lequel le recouvrement ou le chargement de l'étape b) se font grâce à un procédé d'imprégnation humide ou à un procédé de recouvrement à sec.

13. Procédé selon la revendication 12, selon lequel l'étape b) est réalisée avec un procédé de recouvrement à sec en tirant le multifilament dans une couche fluidisée.

14. Procédé selon la revendication 13, selon lequel l'étape b) est réalisée en deux temps, en tirant tout d'abord le multifilament dans une couche fluidisée contenant une résine de liaison et peu ou pas de particules abrasives, et, après un calibrage consécutif, en tirant à nouveau le multifilament dans une couche fluidisée contenant des particules abrasives et peu ou pas de résine de liaison.

15. Procédé selon la revendication 13, selon lequel l'étape b) est réalisée dans un bain fluide double, avec le passage du multifilament dans une première cuve, qui contient de la résine de liaison, et le transfert du multifilament dans une seconde cuve, qui contient une matière abrasive et peu de résine de liaison.

16. Procédé selon la revendication 15, selon lequel le multifilament est sorti de la première cuve à la verticale, est retordu, dévié et au moins partiellement ouvert, puis est amené dans la seconde cuve.

17. Fil de sciage pouvant être obtenu selon un procédé selon l'une des revendications 11 à 16.

18. Fil de sciage selon la revendication 17, **caractérisé en ce que** la quantité de matière abrasive dans le mélange abrasif va en diminuant progressivement de la surface du fil abrasif vers l'intérieur.

19. Utilisation d'un fil de sciage selon l'une des revendications 1 à 10 ou 17 à 18, pour couper des matières cassantes.

20. Utilisation selon la revendication 19, selon laquelle la matière cassante est choisie dans le groupe constitué par du silicium monocristallin, du carbure de silicium, du saphir, du quartz, de l'émeraude, du rubis, une céramique ou Al₂O₃.
